(19) **Europäisches Patentamt European Patent Office Office européen des brevets**

(11) **EP 4 539 159 A1**

(12) **EUROPEAN PATENT APPLICATION**
published in accordance with Art. 153(4) EPC

(43) Date of publication:
**16.04.2025 Bulletin 2025/16**

(21) Application number: **22946082.9**

(22) Date of filing: **13.06.2022**

(51) International Patent Classification (IPC):
*H01M 4/38* $^{(2006.01)}$    *H01M 4/1395* $^{(2010.01)}$

(52) Cooperative Patent Classification (CPC):
C01B 32/21; H01M 4/133; H01M 4/134;
H01M 4/1393; H01M 4/1395; H01M 4/36;
H01M 4/364; H01M 4/366; H01M 4/38;
H01M 4/386; H01M 4/587; H01M 4/62;
H01M 4/625; H01M 10/0525; C01P 2004/03;
(Cont.)

(86) International application number:
**PCT/CN2022/098318**

(87) International publication number:
**WO 2023/240381 (21.12.2023 Gazette 2023/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **LIU, Liangbin**
  **Ningde, Fujian 352100 (CN)**

• **WANG, Jiazheng**
  **Ningde, Fujian 352100 (CN)**
• **LV, Zijian**
  **Ningde, Fujian 352100 (CN)**
• **LI, Yuan**
  **Ningde, Fujian 352100 (CN)**
• **DENG, Jingxian**
  **Ningde, Fujian 352100 (CN)**
• **XIONG, Donggen**
  **Ningde, Fujian 352100 (CN)**
• **DONG, Xiaobin**
  **Ningde, Fujian 352100 (CN)**

(74) Representative: **Gong, Jinping**
**CocreateIP**
**Neumarkterstr. 21**
**81673 München (DE)**

(54) **NEGATIVE ELECTRODE ACTIVE MATERIAL AND PREPARATION METHOD THEREFOR, SECONDARY BATTERY, AND ELECTRIC APPARATUS**

(57)    This application relates to a negative electrode active material and a preparation method thereof, a secondary battery, and an electric apparatus. The negative electrode active material includes: a core material; and a first coating layer provided on at least part of a surface of the core material, where the first coating layer includes a porous carbon material and nano silicon-based particles, and the nano silicon-based particles are embedded into pore structures of the porous carbon material.

FIG. 1

EP 4 539 159 A1

(52) Cooperative Patent Classification (CPC): (Cont.)
C01P 2004/80; C01P 2006/16; C01P 2006/40;
H01M 2004/021; H01M 2004/027; Y02E 60/10

**Description**

**TECHNICAL FIELD**

This application pertains to the field of secondary battery technologies and specifically relates to a negative electrode active material and a preparation method thereof, a secondary battery, and an electric apparatus.

**BACKGROUND**

Secondary batteries have been widely used in various consumer electronic products and electric vehicles due to their prominent advantages such as light weight, no pollution, and no memory effect. With continuous development of the new energy industry, customers impose higher use requirements for the secondary batteries.

Silicon-based negative electrode materials have received extensive attention due to their high capacity. However, the silicon-based material has a serious volume effect, which produces a huge volume swelling during charging. Therefore, during charging and discharging, the silicon-based material is easily crushed and pulverized, and it is difficult to form a stable SEI film on the surface, which leads to rapid capacity decay and poor cycling performance of the battery.

**SUMMARY**

In view of the technical problems in the background, this application provides a negative electrode active material and a preparation method thereof, a secondary battery, and an electric apparatus, such that a secondary battery containing such negative electrode active material has good cycling performance and rate performance.

To achieve the foregoing objective, a first aspect of this application provides a negative electrode active material including:

a core material; and
a first coating layer provided on at least part of a surface of the core material, where the first coating layer includes a porous carbon material and nano silicon-based particles, and the nano silicon-based particles are embedded into pore structures of the porous carbon material.

Compared with the prior art, this application includes at least the following beneficial effects:

In the negative electrode active material of this application, the first coating layer coats the core material, such that the core material can be used for improving pressure resistance of the negative electrode active material, thereby improving structural stability of the negative electrode active material and avoiding deterioration of cycling performance caused by fracture of the particles during cold pressing processing of an electrode plate. In addition, the nano silicon-based particles, as the active material, are embedded into the pore structures of the porous carbon material, and coat the surface of the core material, which can increase utilization of the nano silicon-based particles and improve electronic and ionic conductivity of the material. Moreover, the first coating layer is used, and the nano silicon-based particles are embedded into the pore structures of the porous carbon material, such that the nano silicon-based particles are provided in the pores of the porous carbon material, which can disperse the nano silicon-based particles and reserve a certain swelling space in the pores of the porous carbon material, effectively alleviating swelling of the nano silicon-based particles. Such negative electrode active material being applied to a secondary battery can effectively improve cycling performance and rate performance of the secondary battery.

In any embodiment of this application, a median particle size by volume $D_v50$ of the core material is denoted as D0, a median particle size by volume $D_v50$ of the core material after a 300 MPa pressure test is denoted as D1, and the core material satisfies $DO/(DO - D1) \geq 3$, and optionally $5 \leq DO/(DO - D1) \leq 100$.

In any embodiment of this application, the core material includes at least one of graphite, hard carbon, meso-carbon microbeads, elemental metal, metal alloy, metal compound, and non-metal compound.

Optionally, the graphite includes at least one of natural graphite and artificial graphite.

Optionally, the elemental metal includes at least one of Fe, Cu, Mo, Ni, or W.

Optionally, the metal alloy includes an alloy formed by at least two of Fe, Cu, Mo, Ni, and W.

Optionally, the metal compound includes at least one of $Al_2O_3$, $ZrO_2$, $SiO_2$, $TiO_2$, and WC.

Optionally, the non-metal compound includes at least one of SiC and $Si_3N_4$.

Optionally, the core material includes at least one of natural graphite and artificial graphite.

In any embodiment of this application, the number of the core materials coated within one first coating layer is $\leq 3$, and optionally is 1-2.

In any embodiment of this application, the core material satisfies at least one of the following conditions (1)-(3):

(1) a median particle size by volume $D_v50$ of the core material is $\leq 10\ \mu m$, and optionally $2.0\ \mu m$-$7.0\ \mu m$;

(2) a span of the core material is 0.7-1.2, and optionally 0.8-1.1; and

(3) a porosity of the core material is $\leq 5\%$, and optionally 1%-5%.

In any embodiment of this application, a porosity of the porous carbon material is $\geq 20\%$, and optionally 20%-60%; and

an average pore size of the porous carbon material is $\geq 1\ nm$, and optionally 5 nm-200 nm.

In any embodiment of this application, an average pore size of the porous carbon material is greater than a median particle size by volume $D_v50$ of the nano silicon-based particles.

Optionally, a ratio of the average pore size of the porous carbon material to the median particle size by volume $D_v50$ of the nano silicon-based particles is 1.1-4.0.

In any embodiment of this application, a median particle size by volume $D_v50$ of the nano silicon-based particles is 1 nm-100 nm, and optionally 5 nm-50 nm.

In any embodiment of this application, the porous carbon material further includes an oxygen-containing group bonded to carbon in the porous carbon material.

Optionally, the oxygen-containing group includes at least one of alcohol group, phenol group, ether group, aldehyde group, ketone group, carboxyl group, ester group, and epoxy group.

In any embodiment of this application, a mass percentage of silicon in the first coating layer is $\geq 20\%$, and optionally 35%-55%; and/or

a mass percentage of carbon in the first coating layer is $\geq 30\%$, and optionally 42%-60%; and/or

a mass percentage of oxygen in the first coating layer is $\leq 15\%$, and optionally 3%-15%.

In any embodiment of this application, a thickness of the first coating layer is $\geq 0.5\ \mu m$, and optionally 1 $\mu m$-5 $\mu m$.

In any embodiment of this application, the negative electrode active material further includes a second coating layer, the second coating layer is provided on at least part of a surface of the first coating layer, and the second coating layer includes a conductive material.

Optionally, the conductive material includes at least one of a conductive carbon material and a conductive polymer.

In any embodiment of this application, a thickness of the second coating layer is $\geq 20\ nm$, and optionally 30 nm-200 nm.

In any embodiment of this application, a powder resistivity of the negative electrode active material under a pressure of 4 MPa is denoted as $R_4$, a powder resistivity of the negative electrode active material under a pressure of 16 MPa is denoted as $R_{16}$, and the negative electrode active material satisfies $R_4/R_{16} \leq 4$, and optionally $1.5 \leq R_4/R_{16} \leq 3$.

In any embodiment of this application, $R_4 \leq 2\ \Omega\cdot cm$, and optionally $0.2\ \Omega\cdot cm \leq R_4 \leq 1.5\ \Omega\cdot cm$.

In any embodiment of this application, the negative electrode active material satisfies at least one of the following conditions I-III:

I. a porosity of the negative electrode active material is $\leq 30\%$, and optionally 5%-20%;

II. a median particle size by volume $D_v50$ of the negative electrode active material is 3 $\mu m$-15 $\mu m$, and optionally 5 $\mu m$-12 $\mu m$; and

III. a specific surface area SSA of the negative electrode active material is 0.5 $m^2/g$-10 $m^2/g$, and optionally 1.0 $m^2/g$-5.0 $m^2/g$.

A second aspect of this application provides a preparation method of negative electrode active material including the following steps:

S1. providing a core material;

S2. applying a porous carbon material onto at least part of a surface of the core material; and

S3. depositing nano silicon-based particles into pore structures of the porous carbon material using a chemical vapor deposition method to form the first coating layer.

In any embodiment of this application, step S2 includes the following step:

applying a carbon material precursor onto at least part of the surface of the core material using a spray drying method, followed by carbonization, to form the porous carbon material.

In any embodiment of this application, in step S2:

during the spray drying, a liquid flow rate is controlled to be 1 L/h-5 L/h, a gas flow rate is controlled to be 50 L/min-120 L/min, a drying temperature is controlled to be 150°C-200°C, and an outlet air temperature is controlled to be 80°C-130°C; and/or

a condition for the carbonization is: carbonization is performed at 800°C-2000°C under nitrogen protection for 2 h-4 h.

In any embodiment of this application, in step S3, deposition gas for the chemical vapor deposition is a mixture of silane gas and $H_2$, where a volume percentage of the silane gas is 2%-20%, an inlet gas flow rate of the mixture is 100 mL/min-400 mL/min, a reaction temperature is 400°C-1000°C, and a deposition reaction time is 2 h-10 h.

Optionally, the silane gas includes at least one of monosilane, disilane, trisilane, monochlorosilane, dichlorosilane, and trichlorosilane.

In any embodiment of this application, the preparation method further includes the following step:

S4. applying a second coating layer onto a surface of the first coating layer, where the second coating layer includes a conductive material.

In any embodiment of this application, in step S4, the second coating layer is formed using chemical vapor deposition. Deposition gas for the chemical vapor deposition is a mixture of $C_2H_2$ and $N_2$, where a volume percentage of $C_2H_2$ is 2%-20%, an inlet gas flow rate is 100 mL/min-300 mL/min, a reaction temperature is 800°C-1000°C, and a deposition reaction time is 0.5 h-2 h.

A third aspect of this application provides a secondary battery including a negative electrode plate, and the negative electrode plate includes the negative electrode active material according to the first aspect of this application or a negative electrode active material prepared by using the preparation method according to the second aspect of this application.

A fourth aspect of this application provides an electric apparatus including the secondary battery according to the third aspect of this application.

## BRIEF DESCRIPTION OF DRAWINGS

To describe the technical solutions in this application more clearly, the following briefly describes the accompanying drawings used in this application. Apparently, the accompanying drawings in the following descriptions show merely some embodiments of this application, and persons of ordinary skill in the art may derive other drawings from these accompanying drawings without creative efforts.

FIG. 1 is a schematic structural diagram of a cross section of an embodiment of a negative electrode active material of this application.

FIG. 2 is a scanning electron microscope (SEM) image of an embodiment of a negative electrode active material of this application.

FIG. 3 is a schematic diagram of an embodiment of a secondary battery.

FIG. 4 is an exploded view of FIG. 3.

FIG. 5 is a schematic diagram of an embodiment of a battery module.

FIG. 6 is a schematic diagram of an embodiment of a battery pack.

FIG. 7 is an exploded view of FIG. 6.

FIG. 8 is a schematic diagram of an embodiment of an apparatus using a secondary battery as a power source.

Description of reference signs:

1. battery pack; 2. upper box body; 3. lower box body; 4. battery module; 5. secondary battery; 51. housing; 52. electrode assembly; 53. cover plate; 6. negative electrode active material; 61. core material; 62. first coating layer; 621. porous carbon material; 6221. pore structure; 622. nano silicon-based particle; and 63. second coating layer.

## DESCRIPTION OF EMBODIMENTS

The following further describes this application with reference to specific embodiments. It should be understood that these specific embodiments are merely intended to illustrate this application but not to limit the scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual numerical value may itself be a lower limit or an upper limit which can be combined with any other point or individual numerical value or combined with another lower limit or upper limit to form a range not expressly recorded.

In the description of this specification, it should be noted that "more than" and "less than" are inclusive of the present number and that "more" in "one or more" means two or more than two, unless otherwise specified.

In the description of this specification, unless otherwise specified, the term "or (or)" is inclusive. That is, the phrase "A or (or) B" means "A, B, or both A and B". More specifically, any one of the following conditions satisfies the condition "A or B": A is true (or present) and B is false (or not present); A is false (or not present) and B is true (or present); or both A and B are true (or present). Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in the embodiments of this application).

Silicon-based materials are negative electrode active materials commonly used. However, after multiple cycles, they have a significant problem of large volume swelling, resulting in poor cycling performance. Silicon-carbon materials can alleviate the volume swelling of the silicon materials to some extent, but in actual production, it is found that the existing silicon-carbon materials still have less significantly improvement on the cycling performance. The technicians of this application have found that this is mainly because the existing silicon-carbon materials have poor pressure resistance, which in turn causes that the silicon-carbon materials, especially porous silicon-carbon materials, have unstable structure and are prone to damage during processes of negative electrode plates such as cold pressing. In addition, the silicon-carbon materials also have large powder resistance, large DCR (direct current resistance, Direct Current Resistance, DCR for short) of the prepared battery cell, and the like. The technicians of this application have found through analysis that this is mainly because the silicon-carbon materials, especially the porous silicon-carbon materials, typically have large particles, and their conductive performance deteriorates significantly after a large amount of silicon is added.

The negative electrode active material provided in this application a core material and a first coating layer. The first coating layer is provided on at least part of a surface of the core material, where the first coating layer includes a porous carbon material and nano silicon-based particles, and the nano silicon-based particles are embedded into pore structures of the porous carbon material.

With no limitation on any theory, in the negative electrode active material of this application, the specific first coating layer coats the surface of the core material, and through synergy between the first coating layer and the core material, the core material can be used for improving pressure resistance of the negative electrode active material, thereby improving structural stability of the negative electrode active material and avoiding deterioration of cycling performance caused by fracture of the particles during cold pressing processing of an electrode plate. In addition, the nano silicon-based particles, as the active material, are embedded into the pore structures of the porous carbon material, and coat the surface of the core material, which can increase utilization of the nano silicon-based particles and improve electronic and ionic conductivity of the material. Moreover, the first coating layer is used, and the nano silicon-based particles are embedded into the pore structures of the porous carbon material, such that the nano silicon-based particles are provided in the pores of the porous carbon material, which can disperse the nano silicon-based particles and reserve a certain swelling space in the pores of the porous carbon material, effectively alleviating swelling of the nano silicon-based particles. Such negative electrode active material being applied to a secondary battery can effectively improve cycling performance and rate performance of the secondary battery.

In some embodiments, the nano silicon-based particles include but are not limited to nano silicon particles, and may further include silicon-based particles such as nano silicon-carbon particles.

It can be understood that the first coating layer may coat the entire surface of the core material, or may coat only part of the surface of the core material.

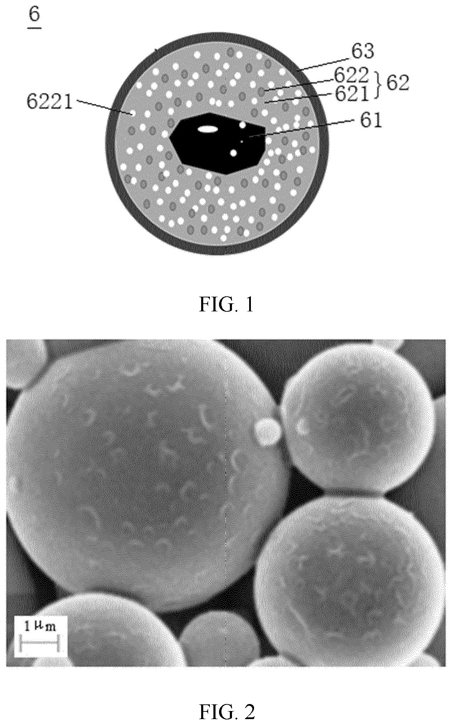

As shown in FIG. 1, in the specific example shown in FIG. 1, the negative electrode active material 6 includes a core material 61 and a first coating layer 62, where the first coating layer 62 coats the entire surface of the core material. The first coating layer 62 includes a porous carbon material 621 and nano silicon-based particles 622. The porous carbon material 621 has pore structures 6221, and the nano silicon-based particles 622 are embedded into the pore structures 6221 of the porous carbon material 621.

It can be understood that the nano silicon-based particles 622 may be embedded into all of the pore structures 6221 of the porous carbon material 621, or the nano silicon-based particles 622 may be embedded into only some of the pore structures 6221.

Further, as shown in FIG. 1, the negative electrode active material 6 further includes a second coating layer 63 (which is described in detail below) provided on at least part of a surface of the first coating layer 62. It can be understood that the second coating layer may coat the entire surface of the first coating layer, or may coat only part of the surface of the first coating layer. In the specific example shown in FIG. 1, the second coating layer 63 coats the entire surface of the first coating layer 62.

As shown in FIG. 2, FIG. 2 is a scanning electron microscope (SEM) image of a negative electrode active material according to an embodiment of this application. It can be seen from FIG. 2 that the negative electrode active material according to this embodiment of this application is in the form of spherical particles.

The inventors have found through in-depth research that when the negative electrode active material of this application satisfies the foregoing design conditions, the performance of the secondary battery can be further improved if one or more of the following conditions are also satisfied optionally.

In some embodiments, a median particle size by volume $D_v50$ of the core material is denoted as D0, a median particle size by volume $D_v50$ of the core material after a 300 MPa pressure test is denoted as D1, and the core material satisfies $DO/(DO - D1) \geq 3$, and optionally $5 \leq DO/(DO - D1) \leq 100$. For example, the core material satisfies $DO/(DO - D1)$ being 3, 5, 8, 10, 15, 20, 30, 50, 70, 80, 90, or 100.

The foregoing D0 and D1 of the core material are obtained through testing by using the following method: using a UTM7305 electronic pressure testing machine, putting 10 g of powder of the core material into a cylindrical mold with an inner cavity diameter of 20 mm, applying a pressure of 300 MPa to the powder in the mold, holding the pressure for 30s, and applying pressure for three consecutive times; taking out the powder, and testing $D_v50$ of the powder after pressure application and denoting it as D1; and testing $D_v50$ of the core material before pressure application and denoting it as D0. $D_v50$ of the core material can be tested by using a method known in the art. For example, it can be determined using a laser particle size analyzer (for example, Malvern Master Size 3000) in accordance with the standard GB/T 19077.1-2016. $DO/(DO - D1)$ represents the change of the median particle size by volume $D_v50$ of the core material before and after pressure application and is denoted as P, that is, $P = DO/(DO - D1)$. The value of P can represent pressure resistance of the core material. A greater value of P means that less powder is broken after pressure application and that the pressure resistance is better. Otherwise, the pressure resistance is worse.

$DO/(DO - D1)$ of the core material is adjusted to meet the foregoing specific condition, such that the core material has good pressure resistance, thereby improving the pressure resistance of the negative electrode active material and reducing the risk of performance degradation caused by structural damage of the material under pressure. In addition, the first coating layer being used can effectively alleviate the swelling of the nano silicon-based particles. Such negative electrode active material being applied to a secondary battery can effectively improve cycling performance and rate performance of the secondary battery.

In some embodiments, the core material includes at least one of graphite, hard carbon, meso-carbon microbeads, elemental metal, metal alloy, and metal compound. Optionally, the core material includes graphite, hard carbon, and meso-carbon microbeads. In addition to having good pressure resistance, the core material itself can also be used as a negative electrode active material, so these core materials being used can further increase energy density of the secondary battery.

Optionally, the graphite includes at least one of natural graphite and artificial graphite.

Optionally, the elemental metal includes at least one of Fe, Cu, Mo, Ni, and W.

Optionally, the metal alloy includes an alloy formed by at least two of Fe, Cu, Mo, Ni, Cr, and W.

Optionally, the metal compound includes at least one of $Al_2O_3$, $ZrO_2$, $SiO_2$, $TiO_2$, and WC.

Optionally, the non-metal compound includes at least one of SiC and $Si_3N_4$.

In some embodiments, the number of the core materials coated within one first coating layer is $\leq 3$, and optionally is 1-2. The number of the core materials inside the negative electrode active material particles being limited can ensure consistency and pressure resistance of the negative electrode active material.

The number of the core material particles can be tested using a cross-sectional SEM and ion polishing is performed on the negative electrode active material. The specific operations are: The negative electrode active material powder is placed in an IB-19500CP ion polisher; in vacuum, the ion source ionizes argon gas to produce argon ions; and after acceleration and focusing, the high-speed argon ions strike out atoms or molecules on the surface of the sample to achieve ion polishing, thereby achieving cross-sectional detection. Then, the obtained cross section is tested in a Sigma 300 ZEISS SEM to obtain data on the number of the core material particles.

In some embodiments, a median particle size by volume $D_v50$ (that is, the foregoing D0) of the core material is $\leq$ 10 $\mu$m, and optionally 2.0 $\mu$m-7.0 $\mu$m. With the median particle size by volume $D_v50$ of the core material set in the given small range, a large thickness space is reserved for the first coating layer containing silicon, which can ensure the silicon content in the negative electrode active material, so as to ensure high capacity of the negative electrode active material. In addition, the core material with small particle size can improve the pressure resistance of the negative electrode active material.

The median particle size by volume $D_v50$ of the core material can be tested using a cross-sectional SEM and ion polishing is performed on the negative electrode active material. The specific operations are: The powder is placed in an IB-19500CP ion polisher; in vacuum, the ion source ionizes argon gas to produce argon ions; and after acceleration and focusing, the high-speed argon ions strike out atoms or molecules on the surface of the sample to achieve ion polishing, thereby achieving cross-sectional detection. Then, the obtained cross section is tested in a Sigma 300 ZEISS SEM to obtain a large number of particle sizes of the core material, which are organized to obtain particle size distribution of the core material.

In some embodiments, a span of the core material is 0.7-1.2, and optionally 0.8-1.1; where the span (Span) is $(D_v90 - D_v10)/D_v50$. The span of the core material being limited to the given range can ensure consistency of the particle sizes of the negative electrode active material.

In some embodiments, a porosity of the core material is $\leq 5\%$, and optionally 1%-5%. The porosity of the core material being limited to the given range can further ensure the pressure resistance of the core material.

In some embodiments, a porosity of the porous carbon material is ≥ 20%, and optionally 20%-60% or 40%-60%. With the porous carbon material having the porosity within the given range used, a space is provided for subsequent embedding of the nano silicon particles and the swelling of the nano silicon particles, improving the cycling performance of the prepared negative electrode active material.

In some embodiments, an average pore size of the porous carbon material is ≥ 1 nm, and optionally 5 nm-200 nm, for example, 5 nm, 10 nm, 50 nm, 100 nm, 150 nm, 180 nm, or 200 nm. With the average pore size of the porous carbon material limited to the given range, a space is provided for subsequent embedding of the nano silicon particles and the swelling of the nano silicon particles.

For a pore size evaluation method, in accordance with GB/T 19587-2017 and GB/T 21650.2-2008, a TriStar II 3020 pore size distribution instrument is used for testing. At a constant temperature, adsorbed gas is adsorbed on the material under test under a series of gradually increasing pressures. The pore size distribution of the porous material can be characterized by a curve of volumes of pore sizes and corresponding pressures, and the average pore size can be obtained through calculation.

Further, an average pore size of the porous carbon material is greater than a median particle size by volume $D_v50$ of the nano silicon-based particles. Further, a ratio of the average pore size of the porous carbon material to the median particle size by volume $D_v50$ of the nano silicon-based particles is 1.1-4.0. In this way, the pores of the porous carbon material are not filled by the nano silicon-based particles, and these unfilled pores reserve a certain swelling space for the swelling of the nano silicon-based particles, effectively alleviating the swelling of the nano silicon-based particles.

The median particle size by volume $D_v50$ of the nano silicon-based particles can be tested by measuring particle sizes of 100 nano silicon-based particles using a scanning electron microscopy (TEM test) and taking an average value. For irregular particles, the particle size is determined based on the largest particle size.

In some embodiments, a median particle size by volume $D_v50$ of the nano silicon-based particles is 1 nm-100 nm, and optionally 1 nm-50 nm, 5 nm-50 nm, or 5 nm-20 nm.

In some embodiments, the porous carbon material further includes an oxygen-containing group bonded to carbon of the porous carbon material; where optionally, the oxygen-containing group includes at least one of alcohol group, phenol group, ether group, aldehyde group, ketone group, carboxyl group, ester group, and epoxy group. The porous carbon material has a certain oxygen content due to the oxygen-containing group, which can improve bonding of Si-O-C and elasticity of the porous carbon material, thereby improving the pressure resistance of the first coating layer.

In some embodiments, a mass percentage of silicon in the first coating layer is ≥ 20%, and optionally 35%-55%. In some embodiments, a mass percentage of carbon in the first coating layer is ≥ 30%, and optionally 42%-60%. In some embodiments, a mass percentage of oxygen in the first coating layer is ≤ 15%, optionally 3%-15%, and optionally 3%-10%. However, an excessively high oxygen content affects the capacity and cycling performance of the negative electrode active material, so the mass percentage of oxygen is preferably controlled within the given range.

The oxygen content in the negative electrode active material is evaluated using a cross-sectional EDS spectroscopy in accordance with GB/T 17359-2012 "Microbeam analysis - Quantitative analysis using energy dispersive spectrometry". The specific operations are: The powder under test is placed in an IB-19500CP ion polisher; in vacuum, the ion source ionizes argon gas to produce argon ions; and after acceleration and focusing, the high-speed argon ions strike out atoms or molecules on the surface of the sample to achieve ion polishing, thereby achieving cross-sectional detection. The obtained cross section of the powder is placed in an OXFORD EDS instrument to test an oxygen content at each point of the cross section of the material, and an average value of ten points tested is taken to obtain the oxygen content in the material.

The silicon content in the negative electrode active material is evaluated using an ICP (inductively coupled plasma emission spectrometer) in accordance with the standard EPA 6010D-2018 of the U.S. Environmental Protection Agency. The specific operations are: The powder under test is placed in a CEM-Mars6 MARS microwave digestion instrument for digestion, and the digested solution is introduced into an ICAP7400 ICP tester. By comparing the silicon concentration in the standard solution, the silicon content in the material is obtained through calculation.

The carbon content in the negative electrode active material is tested using a carbon and sulfur analyzer in accordance with GB/T 20123-2006/ISO 15350:200. The principle is: The sample is heated and burned at high temperature in a high-frequency furnace under an oxygen-rich condition to oxidize carbon to carbon dioxide, and the gas enters an absorption cell to absorb corresponding infrared radiation and then the absorbed infrared radiation is converted into a corresponding signal by a detector. The carbon content in the material is obtained through calculation.

In some embodiments, a thickness of the first coating layer is ≥ 0.5 μm, optionally 1 μm-5 μm, and further optionally 1 μm-3 μm. Controlling the thickness of the first coating layer is conducive to improving conductive performance of the silicon-carbon material, and preferably controlling the thickness to be within 1 μm-5 μm avoids failure to provide activity by the nano silicon-based particles in the inner first coating layer caused by an excessively large thickness.

In some embodiments, the negative electrode active material further includes a second coating layer, the second coating layer is provided on at least part of a surface of the first coating layer, and the second coating layer includes a conductive material. Providing the second coating layer can improve the conductive performance of the prepared negative electrode active material, so as to improve both the pressure resistance and conductivity of the negative electrode active material. In addition, the second coating layer can also reduce contact between the first coating layer and the electrolyte, improving the cycling performance of the negative electrode active material.

Optionally, the conductive material includes at least one of a conductive carbon material and a conductive polymer.

The conductive carbon material may specifically be at least one of amorphous carbon, conductive carbon black, carbon nanotubes, carbon fiber, and graphene. In a specific example, the second coating layer is an amorphous carbon coating layer. The amorphous carbon includes at least one of soft carbon and hard carbon.

The conductive polymer may specifically be at least one of polyacrylonitrile, polyaniline, polypyrrole, polythiophene, polyacetylene, polyphenylacetylene, and polyphenylene.

Further, a thickness of the second coating layer is $\geq$ 20 nm, and optionally 20 nm-200 nm, 30 nm-200 nm, 50 nm-200 nm, or 30 nm-100 nm.

In some embodiments, a powder resistivity of the negative electrode active material under a pressure of 4 MPa is denoted as $R_4$, a powder resistivity of the negative electrode active material under a pressure of 16 MPa is denoted as $R_{16}$, and the negative electrode active material satisfies $R_4/R_{16} \leq 4$, and optionally $1.5 \leq R_4/R_{16} \leq 3$. The technicians of this application have found that the ratio of $R_4/R_{16}$ can be used to characterize the magnitude of the pressure resistance of the negative electrode active material. A smaller value means that the powder resistivity of the material does not decrease due to increased powder contact caused by powder deformation under high pressure, indicating better pressure resistance of the powder.

In some embodiments, $R_4 \leq 2$ $\Omega$•cm, and optionally $0.2$ $\Omega$•cm $\leq R_4 \leq 1.5$ $\Omega$•cm.

In some embodiments, a porosity of the negative electrode active material is $\leq$ 30%, and optionally 5%-20%.

In some embodiments, a median particle size by volume $D_v50$ of the negative electrode active material is 3 $\mu$m-15 $\mu$m, and optionally 5 $\mu$m-12 $\mu$m.

In some embodiments, a specific surface area SSA of the negative electrode active material is 0.5 m$^2$/g-10 m$^2$/g, and optionally 1.0 m$^2$/g-5.0 m$^2$/g.

An embodiment of this application further provides a preparation method of the foregoing negative electrode active material, including the following steps S1 to S3.

S1. Provide a core material.

S2. Apply a porous carbon material onto at least part of a surface of the core material.

S3. Deposit nano silicon-based particles into pore structures of the porous carbon material using a chemical vapor deposition method (CVD method) to form a first coating layer.

In some embodiments, in step S2, a spray drying method is used to apply a carbon material precursor, followed by carbonization, to form the porous carbon material. Further, the carbon material precursor may be an organic carbon source, for example, at least one of phenolic resin, furan resin, urea-formaldehyde resin, pyrimidine resin, epoxy resin, polyoxymethylene methacrylate resin, and polyacrylonitrile.

Further, in step S2, the applying step specifically includes the following steps S21 to S23.

Step S21. Place the core material into the carbon material precursor solution and stir the mixture to uniformity to obtain a mixed solution A.

The ratio of the core material to the carbon material precursor solution is adjusted according to the material design requirements, for example, a mass ratio of the core material to the carbon material precursor in the carbon material precursor solution is 1:1-1:100, and optionally 1:5-1:30.

Step S22. Apply the mixed solution A onto the core material through spray drying to form the carbon material precursor to obtain powder B.

Optionally, during the spray drying, a liquid flow rate is controlled to be 1 L/h-5 L/h, a gas flow rate is controlled to be 50 L/min-120 L/min, a drying temperature is controlled to be 150°C-200°C, and an outlet air temperature is controlled to be 80°C-130°C.

Further, the spray drying is performed in a spray drying device. A 5 L spray drying device is used as an example. For the spray drying device, a liquid flow rate is controlled to be 3 L/h, a gas flow rate is controlled to be 80 L/min, a drying temperature is controlled to be 180°C, an outlet air temperature is controlled to be 110°C, and a particle size of spray-dried powder is controlled to be a target particle size, to obtain an intermediate B.

Step S23. Carbonize the intermediate B to obtain an intermediate C, that is, the core material coated with the porous carbon material.

Optionally, a condition for the carbonization is: carbonization is performed at 800°C-2000°C under nitrogen protection for 2 h-4 h. Further, the carbonization may be performed in a high-temperature furnace. In this way, controlling the carbonization condition for the organic carbon source can retain a certain amount of oxygen-containing groups in the porous carbon material.

In step S3, the nano silicon-based particles are embedded into the pore structures of the intermediate C using the chemical vapor deposition method, to prepare the negative electrode active material of this application.

Further, deposition gas for the chemical vapor deposition is a mixture of silane gas and $H_2$, where a volume percentage of the silane gas is 2%-20%, an inlet gas flow rate of the mixture is 100 mL/min-400 mL/min, a reaction temperature is 400°C-1000°C, and a deposition reaction time is 2 h-10 h.

Optionally, the silane gas includes at least one of monosilane ($SiH_4$), disilane, trisilane, monochlorosilane, dichlorosilane, and trichlorosilane.

In some embodiments, after step S3, the preparation method further includes the following step S4.

S4. Apply a second coating layer onto a surface of the first coating layer, where the second coating layer includes a conductive material.

Further, the second coating layer in step S4 may alternatively be formed using chemical vapor deposition.

Further, conditions for the deposition process of forming the second coating layer from the core material coated with the first coating layer are as follows: Deposition gas is a mixture of $C_2H_2$ and $N_2$, where a volume percentage of $C_2H_2$ is 2%-20%, an inlet gas flow rate is 100 mL/min-300 mL/min, a reaction temperature is 800°C-1000°C, and a deposition reaction time is 0.5 h-2 h.

The raw materials that are not specifically described above are all commercially available.

Secondary battery

A secondary battery is a battery that can be charged after being discharged, to activate active materials for continuous use.

Generally, the secondary battery includes a positive electrode plate, a negative electrode plate, a separator, and an electrolyte. During charging and discharging of the battery, active ions are intercalated and deintercalated back and forth between the positive electrode plate and the negative electrode plate. The separator is provided between the positive electrode plate and the negative electrode plate for separation. The electrolyte conducts ions between the positive electrode plate and the negative electrode plate.

Negative electrode plate

In the secondary battery, the negative electrode plate generally includes a negative electrode current collector and a negative electrode film layer provided on the negative electrode current collector, where the negative electrode film layer includes the foregoing negative electrode active material provided in this application.

The negative electrode current collector may be a common metal foil or a composite current collector (for example, the composite current collector may be formed by providing a metal material on a polymer matrix). In an example, the negative electrode current collector may be a copper foil.

The negative electrode film layer generally may optionally include a binder, a conductive agent, or other optional additives.

In an example, the conductive agent may be one or more of superconducting carbon, acetylene black, carbon black, Ketjen black, carbon dots, carbon nanotubes, graphene, and carbon nanofiber.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyvinyl alcohol (PVA), and polyvinyl butyral (PVB).

In an example, the other optional additives may be a thickener and a dispersant (for example, sodium carboxymethyl cellulose CMC-Na) or a PTC thermistor material.

[Positive electrode plate]

In the secondary battery, the positive electrode plate generally includes a positive electrode current collector and a positive electrode film layer provided on the positive electrode current collector, where the positive electrode film layer includes a positive electrode active material.

The positive electrode current collector may be a common metal foil or a composite current collector (the composite current collector may be formed by providing a metal material on a polymer matrix). In an example, the positive electrode current collector may be an aluminum foil.

A specific type of the positive electrode active material is not limited. An active material known in the art that can be used as a positive electrode of a secondary battery can be used, and persons skilled in the art can make selection based on actual needs.

In an example, the positive electrode active material may include but is not limited to one or more of lithium transition metal oxide, olivine-structured lithium-containing phosphate, and modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available.

In some embodiments, the modified compounds of the foregoing materials may be obtained through doping modification and/or surface coating modification to the materials.

The positive electrode film layer generally may optionally include a binder, a conductive agent, or other optional additives.

In an example, the conductive agent may be one or more of superconducting carbon, acetylene black, carbon black, Ketjen black, carbon dots, carbon nanotubes, Super P (SP), graphene, and carbon nanofiber.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

[Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

[Electrolyte]

The secondary battery may include an electrolyte, and the electrolyte conducts ions between the positive electrode and the negative electrode. The electrolyte may include an electrolytic salt and a solvent.

In an example, the electrolytic salt may be selected from one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bis(trifluoromethane)sulfonimide (LiTFSI), lithium trifluoromethanesulfonate (LiTFS), lithium difluoro(oxalato)borate (LiDFOB), lithium bis(oxalato)borate (LiBOB), lithium difluorophosphate (LiPO$_2$F$_2$), lithium difluoro bis(oxalato)phosphate (LiDFOP), and lithium tetrafluoro oxalato phosphate (LiTFOP).

In an example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), ethyl methanesulfonate (EMS), and diethyl sulfone (ESE).

In some embodiments, the electrolyte further includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

In some embodiments, the secondary battery of this application is a lithium-ion secondary battery.

The secondary battery may be prepared according to a conventional method in the art. For example, the positive electrode plate, the separator, and the negative electrode plate are wound (or stacked) in sequence such that the separator is located between the positive electrode plate and the negative electrode plate for separation to obtain a battery cell, the battery cell is placed into an outer package, the electrolyte is injected, and the package is then sealed, to obtain a secondary battery.

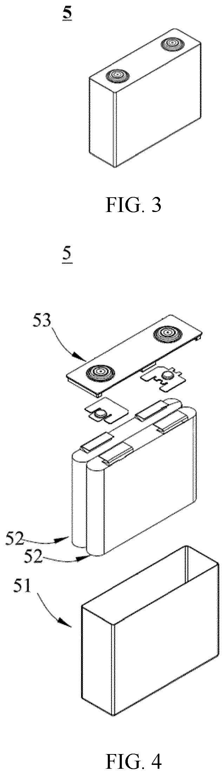

The embodiments of this application do not impose any special limitations on a shape of the secondary battery, and the secondary battery may be cylindrical, rectangular, or of any other shape. FIG. 3 shows a rectangular secondary battery 5 as an example.

In some embodiments, the secondary battery may include an outer package. The outer package is used for packaging the positive electrode plate, the negative electrode plate, and the electrolyte.

In some embodiments, referring to FIG. 4, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity.

The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52, and the quantity may be adjusted as required.

In some embodiments, the outer package of the secondary battery may be a hard shell, for example, a hard plastic shell, an aluminum shell, or a steel shell. The outer package of the secondary battery may alternatively be a soft package, for example, a soft pouch. A material of the soft pack may be plastic, for example, may include one or more of polypropylene (PP), polybutylene terephthalate (PBT), polybutylene succinate (PBS), and the like.

In some embodiments, secondary batteries may be assembled into a battery module, and the battery module may include a plurality of secondary batteries. A specific quantity may be adjusted based on application and capacity of the battery module.

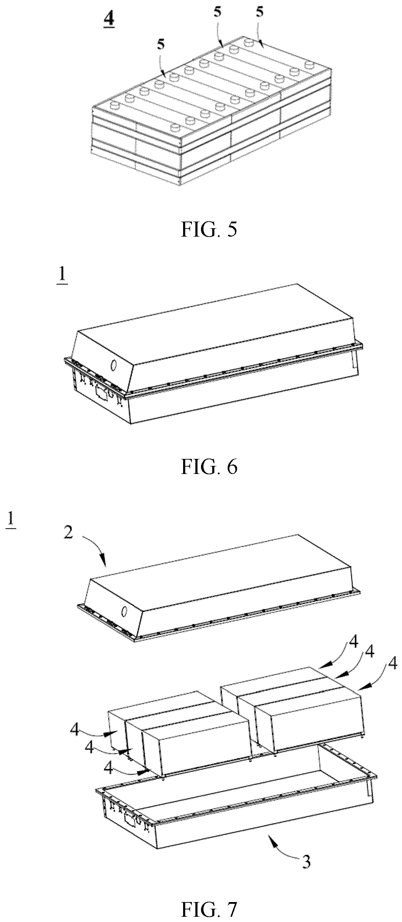

FIG. 5 shows a battery module 4 as an example. In the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

FIG. 6 and FIG. 7 show a battery pack 1 as an example. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

[Electric apparatus]

This application further provides an electric apparatus. The electric apparatus includes at least one of the secondary battery, the battery module, or the battery pack. The secondary battery, the battery module, or the battery pack may be used as a power source of the apparatus, or an energy storage unit of the apparatus. The apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery, the battery module, or the battery pack may be selected for the apparatus based on requirements for using the apparatus.

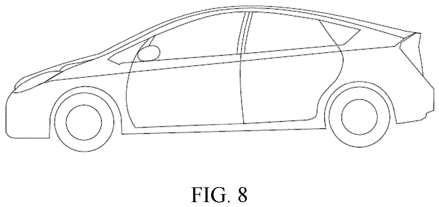

FIG. 8 shows an apparatus as an example. The apparatus is a battery electric vehicle, a hybrid electric vehicle, a plug-in hybrid electric vehicle, or the like. To meet requirements of the apparatus for high power and high energy density of secondary batteries, a battery pack or a battery module may be used.

In another example, the apparatus may be a mobile phone, a tablet computer, a notebook computer, or the like. Such apparatus is generally required to be light and thin and may use a secondary battery as its power source.

The following further describes beneficial effects of this application with reference to examples.

**Examples**

To describe the technical problems solved by this application, technical solutions, and beneficial effects more clearly, the following further provides descriptions in detail with reference to the embodiments and accompanying drawings. Apparently, the described embodiments are only some but not all of the embodiments of this application. The following description of at least one exemplary embodiment is merely illustrative and definitely is not construed as any limitation on this application or on use of this application. All other embodiments obtained by persons of ordinary skill in the art based on the embodiments of this application without creative efforts shall fall within the protection scope of this application.

The materials used in the examples of this application are all commercially available.

**I. Preparation of negative electrode material**

Example 1

The negative electrode material includes an artificial graphite core and a first coating layer coating a surface of the artificial graphite core. The artificial graphite core has a median particle size by volume $D_v50$ of 3.0 $\mu$m, a span of 0.9, and a porosity of 3%. The first coating layer includes a porous carbon material and nano silicon particles, and the nano silicon particles are embedded into pore structures of the porous carbon material. Specifically, the preparation method is as follows:

(1) The core material artificial graphite was put into a phenolic resin precursor solution, and the mixture was stirred to uniformity to obtain a mixed solution A.

(2) The mixed solution A was put into a 5 L spray drying device. For the spray drying device, a liquid flow rate was controlled to be 3 L/h, a gas flow rate was controlled to be 80 L/min, a drying temperature was controlled to be 180°C, an outlet air temperature was controlled to be 110°C, and a particle size of spray-dried powder was controlled to be a target particle size, to obtain an intermediate B.

(3) The intermediate B was placed in a high-temperature furnace, and under nitrogen protection, subjected to carbonization at 1000°C for 2 h, to obtain an intermediate C, that is, the core material coated with the porous carbon material.

(4) The intermediate C obtained in step (3) was put into a CVD furnace, and a mixture with a volume ratio of $SiH_4:H_2$ being 5:95 was introduced, with a gas flow rate of 300 mL/min, a reaction temperature of 600°C, and a deposition reaction time of 7 h. After the reaction ended, the negative electrode active material could be obtained.

Example 2

The negative electrode material is essentially the same as that in Example 1, except that the surface of the first coating layer is also coated with a second coating layer, and the second coating layer is a conductive carbon layer. Specifically, after step (4), it further includes the following step:

(5) The powder D obtained in step (4) was put into a CVD furnace, and a mixture with a volume ratio of $C_2H_2:N_2$ being 20:80 was introduced, with a gas flow rate of 200 mL/min, a reaction temperature of 800°C, and a deposition reaction time of 2 h. After the reaction ended, the negative electrode active material in Example 2 could be obtained.

Examples 3 to 20

The negative electrode material is essentially the same as that in Example 2, except that at least one of the parameters is different: the type of the core material, the pressure resistance of the core material DO/(DO - D1), the mass ratio of Si, C, and O in the first coating layer, the porosity of the porous carbon material, the average pore size of the porous carbon material, the median particle size by volume $D_v50$ of the nano silicon particles, the thickness of the first coating layer, the thickness of the second coating layer, $R_4$ and $R_{16}$ of the negative electrode material, the porosity of the negative electrode material, and the median particle size by volume $D_v50$ of the negative electrode material. Details are shown in Table 1 below.

In Examples 16 to 18, the mass ratio of Si, C, and O in the first coating layer can be adjusted by adjusting the carbonization temperature in step (3) and/or the deposition reaction time in step (4).

Specifically, in Example 16, the carbonization temperature in step (3) was 1500°C and the deposition reaction time in step (4) was 5 h. Specifically, in Example 17, the carbonization temperature in step (3) was 1800°C and the deposition reaction time in step (4) was 11.5 h. Specifically, in Example 18, the carbonization temperature in step (3) was 800°C and the deposition reaction time in step (4) was 7.5 h.

In Examples 10 to 12, the porosity of the porous carbon material can be adjusted by adjusting the type of the resin in step (1). Specifically, in Examples 10 to 12, the types of the resin in step (1) were furan resin, urea-formaldehyde resin, and epoxy resin respectively.

Comparative Example 1

With no core material put in Comparative Example 1, the negative electrode active material in Comparative Example 1 was obtained by the same synthesis method as in Example 1.

A phenolic resin precursor solution was stirred and dispersed to uniformity to obtain a mixed solution A.

The mixed solution A was put into a 5 L spray drying device. For the spray drying device, a liquid flow rate was controlled to be 3 L/h, a gas flow rate was controlled to be 80 L/min, a drying temperature was controlled to be 180°C, an outlet air temperature was controlled to be 110°C, and a particle size of spray-dried powder was controlled to be a target particle size of 9 $\mu$m, to obtain an intermediate B.

The intermediate B was placed in a high-temperature furnace, and under nitrogen protection, subjected to carbonization at 1000°C for 2 h, to obtain a porous carbon material, that is, powder C. The intermediate B was put into a CVD furnace, and a mixture with a volume ratio of $SiH_4:H_2$ being 5:95 was introduced, with a gas flow rate of 300 mL/min, a reaction temperature of 600°C, and a deposition reaction time of 7 h. After the reaction ended, the negative electrode active material was obtained.

Comparative Example 2

Comparative Example 2 is essentially the same as Comparative Example 1, except that the negative electrode active material prepared in Comparative Example 1 is further subjected to the following step:

The negative electrode active material prepared in Comparative Example 1 was put into a CVD furnace, and a mixture with a volume ratio of $C_2H_2:N_2$ being 20:80 was introduced, with a gas flow rate of 200 mL/min, a reaction temperature of 800°C, and a deposition reaction time of 2 h. After the reaction ended, the negative electrode active material can be obtained.

Some parameters of the negative electrode materials prepared in the examples and comparative examples are shown in Table 1 below.

**Table 1**

| Group | Core material | | | | | First coating layer | | | | | Second coating layer | | Negative electrode active material | | | |
|---|---|---|---|---|---|---|---|---|---|---|---|---|---|---|---|---|
| | Type | D0 (μm) | D1 (μm) | D0/(D0 − D1) | Number of particles | Mass ratio of Si:C:O | Thickness (μm) | Porosity of porous carbon | Average pore size (nm) | $D_v50$ of nano Si (nm) | Conductive material | Thickness (nm) | $R_4$ (Ω•cm) | $R_{16}$ (Ω•cm) | Porosity | $D_v50$ (μm) |
| Example 1 | Graphite | 3 | 2.4 | 5 | 1 | 40:50:10 | 3 | 50% | 50 | 25 | / | / | 1.5 | 0.8 | 15% | 9 |
| Example 2 | Graphite | 3 | 2.4 | 5 | 1 | 40:50:10 | 3 | 50% | 50 | 25 | Conductive carbon | 50 | 0.9 | 0.6 | 15% | 9 |
| Example 3 | Graphite | 3 | 2.6 | 8 | 1 | 40:50:10 | 3 | 50% | 50 | 25 | Conductive carbon | 50 | 0.95 | 0.68 | 15% | 9 |
| Example 4 | Graphite | 3 | 2.7 | 10 | 1 | 40:50:10 | 3 | 50% | 50 | 25 | Conductive carbon | 50 | 0.92 | 0.71 | 15% | 9 |
| Example 5 | Graphite | 3 | 2.0 | 3 | 1 | 40:50:10 | 3 | 50% | 50 | 25 | Conductive carbon | 50 | 0.85 | 0.53 | 15% | 9 |
| Example 6 | Graphite | 3 | 2.4 | 5 | 3 | 40:50:10 | 3 | 50% | 50 | 25 | Conductive carbon | 50 | 0.88 | 0.51 | 15% | 9 |
| Example 7 | Hard carbon | 3 | 2.80 | 15 | 1 | 40:50:10 | 3 | 50% | 50 | 25 | Conductive carbon | 50 | 1.25 | 1.12 | 15% | 9 |
| Example 8 | Fe particles | 3 | 2.90 | 30 | 1 | 40:50:10 | 3 | 50% | 50 | 25 | Conductive carbon | 50 | 0.2 | 0.18 | 15% | 9 |

| Group | Core material | | | | | First coating layer | | | | | Second coating layer | | Negative electrode active material | | | |
|---|---|---|---|---|---|---|---|---|---|---|---|---|---|---|---|---|
| | Type | D0 (μm) | D1 (μm) | D0/(D0 − D1) | Number of particles | Mass ratio of Si:C:O | Thickness (μm) | Porosity of porous carbon | Average pore size (nm) | $D_v50$ of nano Si (nm) | Conductive material | Thickness (nm) | $R_4$ (Ω·cm) | $R_{16}$ (Ω·cm) | Porosity | $D_v50$ (μm) |
| Example 9 | Al₂O₃ particles | 3 | 2.94 | 50 | 1 | 40:50:10 | 3 | 50% | 50 | 25 | Conductive carbon | 50 | 1.37 | 1.29 | 15% | 9 |
| Example 10 | Graphite | 3 | 2.4 | 5 | 1 | 40:50:10 | 3 | 60% | 50 | 25 | Conductive carbon | 50 | 0.82 | 0.51 | 15% | 9 |
| Example 11 | Graphite | 3 | 2.4 | 5 | 1 | 40:50:10 | 3 | 40% | 50 | 25 | Conductive carbon | 50 | 0.98 | 0.58 | 15% | 9 |
| Example 12 | Graphite | 3 | 2.4 | 5 | 1 | 40:50:10 | 3 | 20% | 50 | 25 | Conductive carbon | 50 | 1.11 | 0.65 | 15% | 9 |
| Example 13 | Graphite | 3 | 2.4 | 5 | 1 | 40:50:10 | 3 | 50% | 5 | 4.5 | Conductive carbon | 50 | 1.06 | 0.75 | 15% | 9 |
| Example 14 | Graphite | 3 | 2.4 | 5 | 1 | 40:50:10 | 3 | 50% | 100 | 25 | Conductive carbon | 50 | 0.87 | 0.50 | 15% | 9 |
| Example 15 | Graphite | 3 | 2.4 | 5 | 1 | 40:50:10 | 3 | 50% | 200 | 25 | Conductive carbon | 50 | 0.76 | 0.41 | 15% | 9 |
| Example 16 | Graphite | 3 | 2.4 | 5 | 1 | 35:60:5 | 3 | 50% | 50 | 25 | Conductive carbon | 50 | 0.71 | 0.47 | 15% | 9 |
| Example 17 | Graphite | 3 | 2.4 | 5 | 1 | 55:42:3 | 3 | 50% | 50 | 25 | Conductive carbon | 50 | 1.08 | 0.53 | 15% | 9 |

| Group | Core material | | | | | First coating layer | | | | | Second coating layer | | Negative electrode active material | | | |
|---|---|---|---|---|---|---|---|---|---|---|---|---|---|---|---|---|
| | Type | D0 (μm) | D1 (μm) | D0/(D0 − D1) | Number of particles | Mass ratio of Si:C:O | Thickness (μm) | Porosity of porous carbon | Average pore size (nm) | $D_v50$ of nano Si (nm) | Conductive material | Thickness (nm) | $R_4$ (Ω·cm) | $R_{16}$ (Ω·cm) | Porosity | $D_v50$ (μm) |
| Example 18 | Graphite | 3 | 2.4 | 5 | 1 | 40:45:15 | 3 | 50% | 50 | 25 | Conductive carbon | 50 | 1.24 | 0.97 | 15% | 9 |
| Example 19 | Graphite | 3 | 2.4 | 5 | 1 | 40:50:10 | 5 | 50% | 50 | 25 | Conductive carbon | 200 | 1.50 | 0.54 | 15% | 13.2 |
| Example 20 | Graphite | 3 | 2.4 | 5 | 1 | 40:50:10 | 1 | 50% | 50 | 25 | Conductive carbon | 30 | 0.76 | 0.61 | 15% | 5 |
| Comparative Example 1 | / | / | / | / | / | 40:50:10 | 4.5 | 50% | 50 | 25 | / | / | 2.31 | 0.55 | 15% | 9 |
| Comparative Example 2 | / | / | / | / | / | 40:50:10 | 4.5 | 50% | 50 | 25 | Conductive carbon | 50 | 1.22 | 0.37 | 15% | 9 |

## II. Performance test of negative electrode material

### (1) Powder resistivity test of negative electrode material

A resistivity tester (Suzhou Jingge Electronics ST2722) was used. 1 g of powder sample was taken, placed between the electrodes of the tester, and pressed at a constant pressure under different pressures (for example, 4 MPa and 16 MPa) for 15s to 25s with an electronic pressing machine. A sample height of h (cm), a voltage of U, a current of I, and a resistance of R (KΩ) were read. The area S of the powder-pressed sheet was equal to 1 cm², and the powder resistivity was calculated according to the formula $\delta$ = S*R*1000/h, in Ω·cm. The powder resistivity under a pressure of 4 MPa was $R_4$, and the powder resistivity under a pressure of 16 MPa was $R_{16}$.

### (2) Porosity test of negative electrode material

Porosity test method: An AccuPyc II 1340 true density tester was used for the test to obtain the true density of the material. The specific operations were: A given mass of sample was weighed and placed in the true density tester, the test system was sealed, and helium was introduced according to the procedure. Gas pressures in a sample chamber and a swelling chamber were measured. Then, a true volume Vr was measured according to the Bohr's law (PV = nRT), and the true density $\rho_r$ = m/Vr. For an apparent density of the material, a given mass of powder was filled into a cylindrical mold with an inner diameter of 10 mm, and a pressure of 200 MPa was applied, to obtain a corresponding apparent volume $V_0$ of the powder, and the apparent density of the material was $\rho_0$ = m/V$_0$.

$$\text{Porosity P of the material} = 1 - \rho_0/\rho_r \times 100\%.$$

The porosities in this specification were all obtained through testing in the same method.

(3) Particle size test of negative electrode material

$D_v10$, $D_v50$, and $D_v90$ of the negative electrode active material were determined using a laser particle size analyzer (for example, Malvern Master Size 3000) in accordance with the standard GB/T 19077.1-2016. Physical definitions of $D_v10$, $D_v50$, and $D_v90$ are as follows:

$D_y10$: a corresponding particle size of the negative electrode active material when a cumulative volume distribution percentage reaches 10%;
$D_v50$: a corresponding particle size of the negative electrode active material when a cumulative volume distribution percentage reaches 50%; and
$D_v90$: a corresponding particle size of the negative electrode active material when a cumulative volume distribution percentage reaches 90%.

### III. Preparation of battery

1. Preparation of positive electrode plate: A positive electrode active material $LiNi_{0.8}Co_{0.1}Mn_{0.1}O_2$ (NCM811), a binder polyvinylidene fluoride (PVDF), and a conductive agent acetylene black were dissolved in a solvent N-methylpyrrolidone (NMP) at a mass ratio of 97%:1.5%:1.5%, and fully stirred and mixed to obtain a uniform positive electrode slurry; and the positive electrode slurry was applied onto a positive electrode current collector aluminum foil evenly, followed by drying, cold pressing, and cutting, to obtain a positive electrode plate.
2. Preparation of negative electrode plate:
The negative electrode active materials prepared in the examples and comparative examples, artificial graphite, a binder styrene-butadiene rubber (SBR), a binder polyacrylic acid (PAA), a dispersant (CMC-Na), conductive carbon black (Super-P, SP), and carbon nanotubes (CNT) were fully stirred and mixed at a mass ratio of 10%:85%:2%:1%:1%:0.7%:0.3% in an appropriate amount of deionized water to obtain a negative electrode slurry; and the negative electrode slurry was applied onto a current collector copper foil using a coating device, followed by drying, cold pressing, and cutting, to obtain a negative electrode plate.
3. Separator: A 12 $\mu$m thick polyethylene (PE) film was used as a separator.
4. Preparation of electrolyte: Ethylene carbonate (EC), ethyl methyl carbonate (EMC), and diethyl carbonate (DEC) were mixed at a volume ratio of 1:1:1, and then $LiPF_6$ was fully dissolved in the above solution to obtain an electrolyte. In the electrolyte, a concentration of $LiPF_6$ was 1 mol/L.
5. Preparation of secondary battery: The foregoing positive electrode plate, separator, and negative electrode plate were stacked in sequence and wound to obtain an electrode assembly. The electrode assembly was placed in an outer package, and the prepared electrolyte was added, followed by processes such as packaging, standing, formation, and aging, to obtain a secondary battery.

### IV. Battery performance test

1. Cycling performance test method at 45°C of the prepared secondary batteries:

The prepared secondary battery was placed in a constant environment of 45°C, charged to a voltage of 4.25 V at a constant current of 1C, then charged to a current less than or equal to 0.05 mA at a constant voltage of 4.25 V, left standing for 5 min, then discharged to a voltage of 2.5 V at a constant current of 1C, and left standing for 5 min. This was one charge-discharge cycle, and a discharge capacity at this time was a discharge capacity of the first cycle of the secondary battery.

The secondary battery was tested in the foregoing method for 300 charge-discharge cycles, and the discharge capacity of the 300th cycle was recorded.

Capacity retention rate CR at 45°C of secondary battery after 300 cycles at 45°C (%) = discharge capacity of the 300th cycle/discharge capacity of the first cycle $\times$ 100%.

2. Rate performance test of battery

Rate performance test method:

At 25°C, the prepared secondary battery was charged to a charge cut-off voltage of 4.25 V at a constant current of 0.33C (that is, a current value at which a theoretical capacity was completely discharged within 3 h), then charged to a current of 0.05C at a constant voltage, left standing for 5 min, and then discharged to a discharge cut-off voltage of 2.5 V at a constant current of 0.33C. An actual capacity was recorded as C0.

Then, the battery was charged to a charge cut-off voltage of 4.25 V at a constant current of 0.33C, then charged to a current of 0.05C at a constant voltage, left standing for 5 min, and then discharged to a discharge cut-off voltage of 2.5 V at a constant current of 3C. An actual capacity was recorded as C3.

The rate performance of the secondary battery can be characterized as DR = C3/C0 $\times$ 100%. A higher DR value means better rate performance of the material.

Performance parameters of the negative electrode materials prepared in the examples and comparative examples are shown in Table 2 below.

**Table 2**

| Group | Cycling capacity retention rate CR at 45°C (%) | Battery rate performance (DR) |
|---|---|---|
| Example 1 | 95.0% | 80.0% |
| Example 2 | 94.0% | 83.0% |
| Example 3 | 94.3% | 82.4% |
| Example 4 | 94.5% | 82.1% |
| Example 5 | 93.2% | 83.5% |
| Example 6 | 92.8% | 84.2% |
| Example 7 | 94.8% | 78.2% |
| Example 8 | 96.2% | 87.2% |
| Example 9 | 96.9% | 75.3% |
| Example 10 | 93.6% | 84.1% |
| Example 11 | 93.2% | 84.5% |
| Example 12 | 92.6% | 85.1% |
| Example 13 | 97.1% | 80.3% |
| Example 14 | 92.6% | 84.5% |
| Example 15 | 91.1% | 86.2% |
| Example 16 | 94.5% | 83.8% |
| Example 17 | 92.3% | 86.5% |
| Example 18 | 96.5% | 81.2% |
| Example 19 | 89.6% | 70.4% |
| Example 20 | 95.2% | 85.7% |
| Comparative Example 1 | 87.0% | 60.0% |
| Comparative Example 2 | 85.0% | 65.0% |

It can be learned from the examples and Comparative Example 1 in Table 1 and Table 2 that the negative electrode film layer of the negative electrode plate being provided with the negative electrode material in the embodiments of the present invention can improve both the rate performance and cycling performance of the secondary battery. In particular, the following parameters are further optimized: the type of the core material, the pressure resistance of the core material, the median particle size by volume $D_v50$ of the core material, the mass ratio of Si, C, and O in the first coating layer, the porosity of the porous carbon material, the median particle size by volume $D_v50$ of the nano silicon particles, the thickness of the first coating layer, the thickness of the second coating layer, the type of the conductive material in the second coating layer, $R_4$ and $R_{16}$ of the negative electrode material, the porosity of the negative electrode material, and the median particle size by volume $D_v50$ of the negative electrode material, thereby improving the rate performance and cycling performance of the secondary battery.

Further, conductive carbon of the second coating layer in Example 2 is mainly amorphous carbon, and may also contain traces of microcrystalline carbon.

Further, the main difference in Examples 2 to 5 is that DO/(DO - D1) of the negative electrode active material is different. The minimum DO/(DO - D1) in Example 5 is 3, and the pressure resistance of the core material used in Example 5 is relatively poor, so the cycling performance of Example 5 is lower than that of Examples 2 to 4. However, the technicians have found that the rate performance of Example 5 is slightly improved as compared with Examples 2 to 4. The technicians have analyzed the reason for this, which may be that the relatively poor pressure resistance of the negative electrode active material in Example 5 causes the particles to be easily fractured, and the fractured particles slightly improve the rate performance.

The main difference between Example 6 and Example 2 is that the number of the particles of the core material of the negative electrode active material in Example 6 is different, and the number of the particles of the core material of the negative electrode active material in Example 6 is 3, with relatively low pressure resistance, thereby leading to low cycling performance.

The main difference between Examples 7 to 9 and Example 2 is that the types of the core materials of the negative electrode active materials in Examples 7 to 9 are different, and their DO/(DO - D1) are different accordingly. Compared with Example 7 in which the core material is hard carbon, Example 2 and Examples 8 and 9 have better cycling performance. Preferably, Example 2 and Example 8 can obtain both good cycling performance and battery rate performance.

The main difference between Examples 10 to 12 and Example 2 is that the porosity of the porous carbon materials in the first coating layers of the negative electrode active materials in Examples 10 to 12 is different and within a range of 20%-60%, and preferably 40%-60%.

The main difference between Examples 13 to 15 and Example 2 is that the average pore sizes of the porous carbon materials of the negative electrode active materials in Examples 13 to 15 are different, and the average pore size of the porous carbon material is within a range of 5 nm-200 nm, such that both good cycling performance and battery rate performance can be provided.

The main difference between Examples 16 to 18 and Example 2 is that the mass ratios of Si:C:O in the first coating layers of the negative electrode active materials in Examples 16 to 18 are different, and the mass ratio of Si:C:O in the first coating layer is within a range of (35%-55%):(42%-60%):(3%-15%), such that both good cycling performance and battery rate performance can be provided.

The main difference between Examples 19 and 20 and Example 2 is that the thicknesses of the first coating layers and the second coating layers of the negative electrode active materials in Examples 19 and 20 are different, and Example 2 and Example 20 have better cycling performance and battery rate performance than Example 19.

The foregoing descriptions are merely specific embodiments of this application, but are not intended to limit the protection scope of this application. Any equivalent modification or replacement readily figured out by persons skilled in the art within the technical scope disclosed in this application shall fall within the protection scope of this application. Therefore, the protection scope of this application shall be subject to the protection scope of the claims.

**Claims**

1. A negative electrode active material, comprising:

   a core material; and
   a first coating layer provided on at least part of a surface of the core material, wherein the first coating layer comprises a porous carbon material and nano silicon-based particles, and the nano silicon-based particles are embedded into pore structures of the porous carbon material.

2. The negative electrode active material according to claim 1, wherein a median particle size by volume $D_v50$ of the core material is denoted as D0, a median particle size by volume $D_v50$ of the core material after a 300 MPa pressure test is denoted as D1, and the core material satisfies DO/(DO - D1) ≥ 3, and optionally 5 ≤ DO/(DO - D1) ≤ 100.

3. The negative electrode active material according to claim 1 or 2, wherein the core material comprises at least one of graphite, hard carbon, meso-carbon microbeads, elemental metal, metal alloy, metal compound, and non-metal compound; wherein

optionally, the graphite comprises at least one of natural graphite and artificial graphite;
optionally, the elemental metal comprises at least one of Fe, Cu, Mo, Ni, Cr, or W;
optionally, the metal alloy comprises an alloy formed by at least two of Fe, Cu, Mo, Ni, Cr, and W;
optionally, the metal compound comprises at least one of $Al_2O_3$, $ZrO_2$, $SiO_2$, $TiO_2$, and WC; and
optionally, the non-metal compound comprises at least one of SiC and $Si_3N_4$.

4. The negative electrode active material according to any one of claims 1 to 3, wherein the number of the core materials coated within one first coating layer is $\leq 3$, and optionally is 1-2.

5. The negative electrode active material according to any one of claims 1 to 4, wherein the core material satisfies at least one of the following conditions (1)-(3):

(1) a median particle size by volume $D_v50$ of the core material is $\leq 10$ $\mu m$, and optionally 2.0 $\mu m$-7.0 $\mu m$;
(2) a span of the core material is 0.7-1.2, and optionally 0.8-1.1; and
(3) a porosity of the core material is $\leq 5\%$, and optionally 1%-5%.

6. The negative electrode active material according to any one of claims 1 to 5, wherein a porosity of the porous carbon material is $\geq 20\%$, and optionally 20%-60%; and
an average pore size of the porous carbon material is $\geq 1$ nm, and optionally 5 nm-200 nm.

7. The negative electrode active material according to any one of claims 1 to 6, wherein an average pore size of the porous carbon material is greater than a median particle size by volume $D_v50$ of the nano silicon-based particles; wherein
optionally, a ratio of the average pore size of the porous carbon material to the median particle size by volume $D_v50$ of the nano silicon-based particles is 1.1-4.0.

8. The negative electrode active material according to any one of claims 1 to 7, wherein a median particle size by volume $D_v50$ of the nano silicon-based particles is 1 nm-100 nm, and optionally 5 nm-50 nm.

9. The negative electrode active material according to any one of claims 1 to 8, wherein the porous carbon material further comprises an oxygen-containing group bonded to carbon of the porous carbon material; wherein
optionally, the oxygen-containing group comprises at least one of alcohol group, phenol group, ether group, aldehyde group, ketone group, carboxyl group, ester group, and epoxy group.

10. The negative electrode active material according to any one of claims 1 to 9, wherein

a mass percentage of silicon in the first coating layer is $\geq 20\%$, and optionally 35%-55%; and/or
a mass percentage of carbon in the first coating layer is $\geq 30\%$, and optionally 42%-60%; and/or
a mass percentage of oxygen in the first coating layer is $\leq 15\%$, and optionally 3%-15%.

11. The negative electrode active material according to any one of claims 1 to 10, wherein a thickness of the first coating layer is $\geq 0.5$ $\mu m$, and optionally 1 $\mu m$-5 $\mu m$.

12. The negative electrode active material according to any one of claims 1 to 11, wherein the negative electrode active material further comprises a second coating layer, the second coating layer is provided on at least part of a surface of the first coating layer, and the second coating layer comprises a conductive material; wherein
optionally, the conductive material comprises at least one of a conductive carbon material and a conductive polymer.

13. The negative electrode active material according to any one of claims 1 to 12, wherein a thickness of the second coating layer is $\geq 20$ nm, and optionally 30 nm-200 nm.

14. The negative electrode active material according to any one of claims 1 to 13, wherein a powder resistivity of the negative electrode active material under a pressure of 4 MPa is denoted as $R_4$, a powder resistivity of the negative electrode active material under a pressure of 16 MPa is denoted as $R_{16}$, and the negative electrode active material

satisfies $R_4/R_{16} \leq 4$, and optionally $1.5 \leq R_4/R_{16} \leq 3$.

15. The negative electrode active material according to any one of claims 1 to 14, wherein $R_4 \leq 2\ \Omega\bullet cm$, and optionally $0.2\ \Omega\bullet cm \leq R_4 \leq 1.5\ \Omega\bullet cm$.

16. The negative electrode active material according to any one of claims 1 to 15, wherein the negative electrode active material satisfies at least one of the following conditions I-III:

   I. a porosity of the negative electrode active material is $\leq 30\%$, and optionally 5%-20%;
   II. a median particle size by volume $D_v50$ of the negative electrode active material is $3\ \mu m$-$15\ \mu m$, and optionally $5\ \mu m$-$12\ \mu m$; and
   III. a specific surface area SSA of the negative electrode active material is $0.5\ m^2/g$-$10\ m^2/g$, and optionally $1.0\ m^2/g$-$5.0\ m^2/g$.

17. A preparation method of the negative electrode active material according to any one of claims 1 to 16, comprising the following steps:

   S1. providing a core material;
   S2. applying a porous carbon material onto at least part of a surface of the core material; and
   S3. depositing nano silicon-based particles into pore structures of the porous carbon material using a chemical vapor deposition method to form the first coating layer.

18. The preparation method according to claim 17, wherein step S2 comprises the following step:
   applying a carbon material precursor onto at least part of the surface of the core material using a spray drying method, followed by carbonization, to form the porous carbon material.

19. The preparation method according to claim 18, wherein in step S2,

   during the spray drying, a liquid flow rate is controlled to be 1 L/h-5 L/h, a gas flow rate is controlled to be 50 L/min-120 L/min, a drying temperature is controlled to be 150°C-200°C, and an outlet air temperature is controlled to be 80°C-130°C; and/or
   a condition for the carbonization is: carbonization is performed at 800°C-2000°C under nitrogen protection for 2 h-4 h.

20. The preparation method according to any one of claims 17 to 19, wherein in step S3, deposition gas for the chemical vapor deposition is a mixture of silane gas and $H_2$, wherein a volume percentage of the silane gas is 2%-20%, an inlet gas flow rate of the mixture is 100 mL/min-400 mL/min, a reaction temperature is 400°C-1000°C, and a deposition reaction time is 2 h-10 h; wherein
   optionally, the silane gas comprises at least one of monosilane, disilane, trisilane, monochlorosilane, dichlorosilane, and trichlorosilane.

21. The preparation method according to any one of claims 17 to 20, further comprising the following step:
   S4. applying a second coating layer onto a surface of the first coating layer, wherein the second coating layer comprises a conductive material.

22. The preparation method according to claim 21, wherein in step S4, the second coating layer is formed using chemical vapor deposition, and deposition gas for the chemical vapor deposition is a mixture of $C_2H_2$ and $N_2$, wherein a volume percentage of $C_2H_2$ is 2%-20%, an inlet gas flow rate is 100 mL/min-300 mL/min, a reaction temperature is 800°C-1000°C, and a deposition reaction time is 0.5 h-2 h.

23. A secondary battery, comprising a negative electrode plate, wherein the negative electrode plate comprises the negative electrode active material according to any one of claims 1 to 16 or a negative electrode active material prepared by using the method according to any one of claims 17 to 22.

24. An electric apparatus, comprising the secondary battery according to claim 23.

FIG. 1

FIG. 2

<u>5</u>

FIG. 3

<u>5</u>

FIG. 4

**4**

FIG. 5

**1**

FIG. 6

**1**

FIG. 7

FIG. 8

## INTERNATIONAL SEARCH REPORT

| | International application No. |
|---|---|
| | **PCT/CN2022/098318** |

| A. | CLASSIFICATION OF SUBJECT MATTER |
|---|---|

H01M4/38(2006.01)i;H01M4/1395(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 负极, 阳极, 核, 壳, 包覆, 碳, 孔, 硅, 气相沉积, negative electrode, anode, core, shell, coat, carbon, pore, silicon, Si, vapor deposition, CVD

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109904404 A (SK INNOVATION CO., LTD. et al.) 18 June 2019 (2019-06-18) description, paragraphs 35-130 | 1-24 |
| X | CN 104638252 A (SHENZHEN BTR NEW ENERGY MATERIALS CO., LTD.) 20 May 2015 (2015-05-20) description, paragraphs 1-83 | 1-16, 23-24 |
| X | CN 107925064 A (ULSAN NATIONAL INSTITUTE OF SCIENCE AND TECH) 17 April 2018 (2018-04-17) description, paragraphs 1-32 and 43-87 | 1-24 |
| X | CN 114551842 A (SONGSHAN LAKE MATERIALS LABORATORY) 27 May 2022 (2022-05-27) description, paragraphs 5-31 | 1-24 |
| X | CN 112635733 A (JIANGSU JIXIN SEMICONDUCTOR SILICON MATERIAL RESEARCH INSTITUTE CO., LTD.) 09 April 2021 (2021-04-09) description, paragraphs 4-31 | 1-24 |
| A | JP 2016222475 A (SHIN-ETSU CHEMICAL CO., LTD.) 28 December 2016 (2016-12-28) entire document | 1-24 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 February 2023** | **03 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/098318**

| Patent document cited in search report | | | Publication date (day/month/year) | Patent family member(s) | | | Publication date (day/month/year) |
|---|---|---|---|---|---|---|---|
| CN | 109904404 | A | 18 June 2019 | KR | 20190067496 | A | 17 June 2019 |
| | | | | US | 2019181437 | A1 | 13 June 2019 |
| | | | | US | 10923715 | B2 | 16 February 2021 |
| | | | | US | 2021151747 | A1 | 20 May 2021 |
| CN | 104638252 | A | 20 May 2015 | CN | 104638252 | B | 12 April 2017 |
| CN | 107925064 | A | 17 April 2018 | KR | 20160147672 | A | 23 December 2016 |
| | | | | KR | 101933098 | B1 | 27 December 2018 |
| | | | | HUE | 051614 | T2 | 01 March 2021 |
| | | | | EP | 3309873 | A1 | 18 April 2018 |
| | | | | EP | 3309873 | B1 | 27 May 2020 |
| | | | | WO | 2016204512 | A1 | 22 December 2016 |
| | | | | US | 2018337400 | A1 | 22 November 2018 |
| | | | | US | 10340518 | B2 | 02 July 2019 |
| | | | | JP | 2018524774 | A | 30 August 2018 |
| | | | | JP | 6748120 | B2 | 26 August 2020 |
| CN | 114551842 | A | 27 May 2022 | None | | | |
| CN | 112635733 | A | 09 April 2021 | CN | 112635733 | B | 31 December 2021 |
| JP | 2016222475 | A | 28 December 2016 | JP | 6394498 | B2 | 26 September 2018 |

Form PCT/ISA/210 (patent family annex) (July 2022)